# EUROPÄISCHE PATENTSCHRIFT

(11) **EP 0 490 304 B1**
(45) Veröffentlichungstag und Bekanntmachung des Hinweises auf die Patenterteilung: **08.03.1995**
(21) Anmeldenummer: 91121025.0
(22) Anmeldetag: 07.12.1991
(51) Int. Cl.: G02B 26/02

(54) **Optischer Schalter**
Optical commutator
Commutateur optique

(30) Priorität: 14.12.1990 DE 4040001
(43) Veröffentlichungstag der Anmeldung: 17.06.1992
(73) Patentinhaber: ANT Nachrichtentechnik GmbH, D-71522 Backnang (DE)
(72) Erfinder: Arnold, Wolfgang, Dr. rer. nat., W-7152 Aspach 1 (DE); Benz, Gerhard, Dr. rer. nat., W-7030 Böblingen (DE); Hauer, Heiner, Dipl.-Ing., W-7012 Fellbach (DE); Müller-Fiedler, Roland, Dr. rer. nat., W-7250 Leonberg (DE)

(56) Entgegenhaltungen:
- DE-A- 3 716 836
- GB-A- 2 073 881
- US-A- 4 204 742
- US-A- 4 932 745
- PATENT ABSTRACTS OF JAPAN vol. 8, no. 163 (P-290)(1600) 27. Juli 1984 ; & JP-A-59 060 402

## Beschreibung

Die vorliegende Erfindung betrifft einen optischen Schalter, bei dem in Abhängigkeit von der Stellung eines verschiebbar gelagerten Umlenkelements der Strahlengang eines Lichtstrahls entweder in seiner Richtung geändert wird oder seine Richtung beibehält.

Fällt ein an einem optischen Nachrichtentübertragungsnetz angeschlossener Teilnehmer wegen einer Störung aus, so muß dafür gesorgt werden, daß optische Signale am Eingang des Teilnehmers direkt unter Umgehung des gestörten Teilnehmers auf seinen Ausgang geschaltet werden. Man spricht hier von einer Bypass-Schaltung. Ein für die Realisierung der Bypass-Schaltung geeigneter optischer Schalter der einleitend wiedergegebenen Art ist beispielsweise aus Applied Optics, Vol 19, Nr. 15, 1. August 1980, S. 2574 - 2577 bekannt. Das in dem bekannten optischen Schalter verwendete Umlenkelement wird durch einen Elektromagneten betätigt. Ein solcher Elektromagnet hat im Vergleich zu den lichtführenden Elementen (z. B. Fasern, Linsen) im Schalter einen relativ großen Platzbedarf, was einer Miniaturisierung des Schalters entgegensteht.

Der Erfindung liegt die Aufgabe zugrunde, einen optischen Schalter der eingangs genannten Art anzugeben, welcher sich durch einen möglichst kleinvolumigen, kompakten Aufbau auszeichnet.

Erfindungsgemäß wird diese Aufgabe durch die Merkmale des Anspruch 1 gelöst. Vorteilhafte Weiterbildungen der Erfindung gehen aus den Unteransprüchen hervor.

Anhand eines in der Zeichnung dargestellten Ausführungsbeispiels wird nachfolgend die Erfindung näher erläutert.
Fig. 1 zeigt das Prinzip einer optischen Bypass-Schaltung und
Fig. 2 zeigt einen optischen Schalter im Längsschnitt

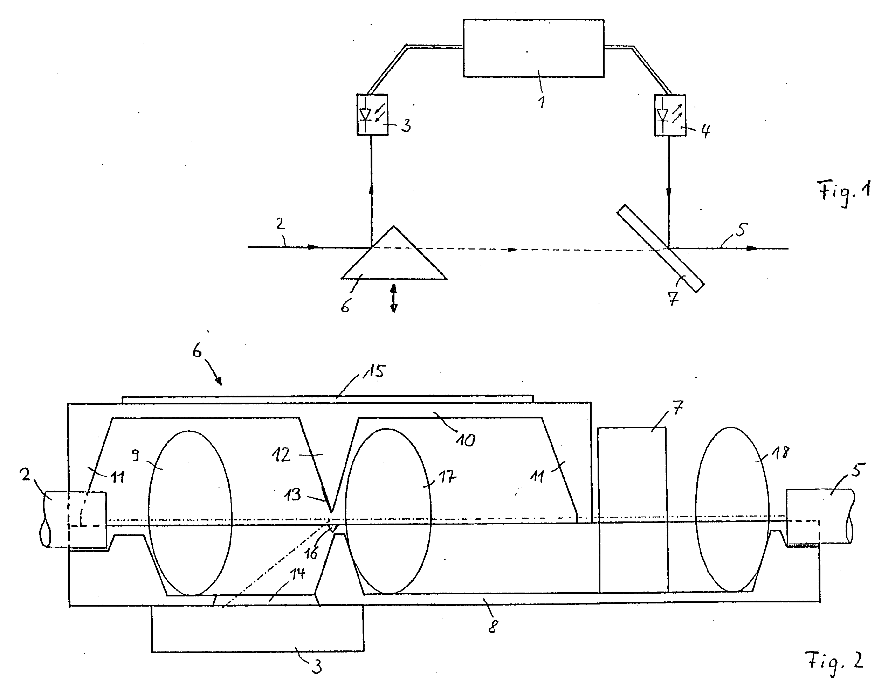

Die Figur 1 zeigt einen an ein optisches Nachrichtenübertragungssystem angeschalteten Teilnehmer 1. Mit dem Teilnehmer ist eine Einheit gemeint, welche in der Lage ist, elektrische Signale zu empfangen, sie in irgendeiner Weise zu verarbeiten und elektrische Signale abzugeben. Für einen an ein optisches Nachrichtenübertragungsnetz angeschlossenen Teilnehmer 1 werden die von einem Eingangslichtwellenleiter 2 gelieferten optischen Signale von einem optoelektrischen Wandler 3 (z. B. Photodiode) in elektrische Signale umgewandelt und an den Teilnehmer 1 weitergeleitet. Die vom Teilnehmer 1 abgegebenen elektrischen Signale werden von einem elektrooptischen Wandler 4 (z. B. Laser) in optische Signale umgewandelt und in einen Ausgangslichtwellenleiter 5 eingekoppelt. Sollte nun der Teilnehmer 1 oder der optoelektrische Wandler 3 oder der elektrooptische Wandler 4 gestört sein, so ist eine Bypass-Schaltung vorzusehen, welche die Lichtsignale des Eingangswellenleiters 2 unter Umgehung des Teilnehmers 1 direkt in den Ausgangswellenleiter 5 einspeist. Die Bypass-Schaltung weist einen optischen Schalter auf mit einem Umlenkelement 6, welches im Normalbetrieb die über den Eingangslichtwellenleiter 2 ankommenden Lichtsignale auf den mit dem Teilnehmer 1 verbundenen optoelektrischen Wandler umlenkt. Außerdem ist ein Strahlteiler 7 vorgesehen, der die vom elektrooptischen Wandler 4 am Ausgang des Teilnehmers 1 abgegebenen Lichtsignale in den Ausgangslichtwellenleiter 5 einkoppelt. Dieser Strahlteiler 7 kann beispielsweise polarisationsabhängig sein. D.h. er reflektiert Licht einer ganz bestimmten Polarisationsrichtung und transmittiert Licht, das von dieser Polarisationsrichtung abweicht. In dem in Figur 1 dargestellten Beispiel wird das vom elektrooptischen Wandler 4 abgegebene Licht einer bestimmten Polarisationsrichtung am Strahlteiler 7 reflektiert und zum Ausgangslichtwellenleiter 5 hin umgelenkt. Für den Fall, daß in dem Teilnehmerzweig eine Störung aufgetreten ist, wird das Umlenkelement 6 aus dem Strahlengang des über den Eingangslichtwellenleiter 2 ankommenden Lichts herausgerückt, so daß dieses Licht direkt auf den Strahlteiler 7 fällt, diesen durchdringt und in den Ausgang des Lichtwellenleiters 5 einkoppelt.

Der für die Bypass-Schaltung benötigte optische Schalter wird, um einen möglichst kleinvolumigen Aufbau zu erreichen, z. B. auf einem Silizium-Substrat 8 realisiert. Die Fig. 2 zeigt einen Längsschnitt durch ein solches Substrat. Es ist durch anisotropes Ätzen mit einer Kontur versehen, die den für die Bypass-Schaltung erforderlichen optischen Elemente als Aufnahme und Halterung dient. Auf dem Substrat 8 ist in einer Nut der Eingangslichtwellenleiter 2 fixiert. Eine ebenfalls in dem Substrat angeordnete erste Linse 9 fokussiert das von dem Eingangslichtwellenleiter 2 kommende Licht (als strichpunktierte Linie dargestellt) auf eine stelle, an der sich das Umlenkelement 6 befindet. Das Umlenkelement 6 besteht aus einer Membran 10, welche mit ihrem äußeren Rand mit Hilfe von Stützen 11 auf dem Substrat 8 fixiert ist. Im Zentrum der Membran 10 ist ein Steg 12 angeordnet, der auf den vom Eingangslichtwellenleiter 2 ausgehenden Strahlengang gerichtet ist. Eine Durchbiegung der Membran 10 veranlaßt den Steg 12 in den Strahlengang einzutauchen. Diejenige Stelle des Steges, auf die das Licht auftrifft, ist mit einer reflektierenden Fläche 13 versehen. Ist der Steg in den Strahlengang des Eingangslichtwellenleiters 2 eingetaucht, so wird er durch eine Öffnung 14 im Substrat 8 auf den an der Unterseite des Substrats 8 angeordneten optoelektrischen Wandler 3 umgelenkt. Diese Stellung hat der von der Membran 10 ausgehende Steg im Normalbetrieb, also immer dann, wenn weder die Wandlerelemente 3 und 4 noch der Teilnehmer 1 eine Störung aufweisen. Die Durchbiegung der Membran 10, welche das Eintauchen des Steges 12 in den Strahlengang des Eingangslichtwellenleiters 2 bewirkt, wird von einem auf der dem Steg 12 gegenüberliegenden Seite der Membran 10 aufgebrachten elektromagnetischen Wandler 15 veranlaßt. Zweckmäßigerweise wird als elektromechanischer Wandler 15 eine piezoelektische Schicht verwendet, deren Längenausdehnung durch Anlegen einer elektrischen Spannung, die die Schicht heizt, verändert werden kann. Anstelle eines piezoelektrischen Wandlers kann z. B. auch ein thermomechanischer Wandler verwendet werden. Bei dem hier vorliegenden Anwendungsfall wird die piezoelektrische Schicht 15 im Normalbetrieb von einer Spannung angesteuert, so daß sie eine Längenausdehnung erfährt, welche eine Durchbiegung der Membran 10 in Richtung auf das Substrat 8 zu hervorruft. Fällt die Steuerspannung für die piezoelektrische Schicht 15 aus, so verkürzt sie sich, wodurch die Membran 10 zurückgebogen und der Steg 12 aus dem Strahlengang des Eingangslichtwellenleiters 2 herausgezogen wird. Dann gelangt das Licht aus dem Eingangslichtwellenleiter 2 ohne Umlenkung zu dem ebenfalls auf dem Substrat 8 fixierten Ausgangslichtwellenleiter 5.

Damit die auf dem Steg 12 befindliche reflektierende Fläche 13, wenn sie in den Strahlengang eingetaucht ist, eine definierte Stellung relativ zum Strahlengang hat, ist auf dem Substrat 8 ein Anschlag für den Steg 12 vorgesehen. In dem in Figur 2 dargestellten Ausführungsbeispiel besteht der Anschlag aus einer auf der Oberseite des Substrats 8 eingelassenen Kerbe 16, in die der hier keilförmig ausgebildete Steg 12 eingreift.

Das zuvor beschriebenen Umlenkelement 6, bestehend aus der Membran 10, den an ihrem Außenrand angeordneten Stützen 11 und dem Steg 12, wird beispielsweise einstückig durch anisotropes Ätzen aus einem Einkristall (z. B. Silizium) hergestellt. Dies hat den Vorteil, daß aufgrund der vorgegebenen Kristallrichtung die den Strahlumlenkwinkel bestimmende Form des Steges reproduzierbar hergestellt werden kann.

Wie bereits vorangehend angesprochen, sollte der Steg 12 zentral von der Membran 10 ausgehen. Durch diese symmetrische Anordnung des Steges 12 wird ein Verdrehen seiner reflektierenden Fläche 13 in eine bevorzugte Richtung verhindert.

In dem soeben beschriebenen, auf dem Substrat 8 angeordneten optischen Schalter sind auch noch das Umlenkelement 7 und Zwei weitere Linsen 17 und 18 angeordnet. Die auf die erste Linse 9 folgende zweite Linse 17 bewirkt eine Parallelisierung des von der ersten Linse 9 fokussierten Lichtstrahls. Der parallelisierte Lichtstrahl fällt auf das Umlenkelement 7, durchdringt dieses und wird danach von der dritten Linse 18 auf den Ausgangslichtwellenleiter 5 fokussiert.

Auf dem Substrat 8 kann auch noch der elektrooptische Wandler 4 (siehe Figur 1) oder ein mit diesem verbundener Lichtwellenleiter und eine Linse angeordnet sein, die das Licht des elektrooptischen Wandlers 4 parallelisiert und dem Umlenkelement 7 zuführt, von wo es in den Ausgangslichtwellenleiter 5 eingekoppelt wird.

## Patentansprüche

1. Optischer Schalter mit einem verschiebbar gelagerten Umlenkelement (6), das in Abhängigkeit von der Stellung den Strahlengang eines Lichtstrahls entweder in seiner Richtung ändert oder seine Richtung unverändert läßt, dadurch gekennzeichnet, daß das Umlenkelement (6) eine Membran (10) aufweist, die mit ihrem äußeren Rand im Schalter fixiert ist und von der ein mit einer reflektierenden Fläche (13) versehener Steg (12) ausgeht und daß ein auf die Membran (10) einwirkender elektromechanischer Wandler (15) vorgesehen ist, der deren Durchbiegung so zu ändern vermag, daß der Steg (12) mit seiner reflektierenden Fläche (13) entweder in den Lichtstrahl eintaucht und ihn umlenkt, oder aus dem Lichtstrahl herausgezogen ist und dessen Richtung nicht ändert.

2. Optischer Schalter nach Anspruch 1, dadurch gekennzeichnet, daß das Umlenkelement (6) einstückig aus einem Einkristall durch anisotropes Ätzen hergestellt ist.

3. Optischer Schalter nach Anspruch 1, dadurch gekennzeichnet, daß der elektromechanische Wandler (15) eine piezoelektrische Schicht ist, welche auf der Membran (10) auf der dem Steg (12) abgewandten Seite aufgebracht ist.

4. Optischer Schalter nach Anspruch 1, dadurch gekennzeichnet, daß der elektromechanische Wandler (15) eine thermomechanische Schicht ist, welche auf der Membran (10) auf der dem Steg (12) abgewandten Seite aufgebracht ist.

5. Optischer Schalter nach Anspruch 1, dadurch gekennzeichnet, daß der Steg (12) bei der Durchbiegung der Membran (10) auf einen Anschlag (16) trifft, der ihm eine definierte Position beim Eintauchen in den Lichtstrahl verleiht.

## Claims

1. Optical commutator with a displaceably mounted deflecting element (6), which in dependence on setting either changes the beam path of a light beam in its direction or leaves its direction unchanged, characterised thereby that the deflecting element (6) comprises a membrane (10), which is fixed by its outer edge in the commutator and from which extends a web (12) provided with a reflecting surface (13) and that an electromechanical transducer (15) acting on the membrane (10) is provided, which is able to so change the set thereof that the web (12) either projects by its reflecting surface (13) into the light beam and deflects it or is retracted from the light beam and does not change its direction.

2. Optical commutator according to claim 1, characterised thereby that the deflecting element (6) is produced in one piece from a monocrystal by anistropic etching.

3. Optical commutator according to claim 1, characterised thereby that the electromechanical transducer (15) is a piezoelectric layer which is applied to the membrane (10) on the side remote from the web (12).

4. Optical commutator according to claim 1, characterised thereby that the electromechanical transducer (15) is a thermomechanical layer which is applied to the membrane (10) on the side remote from the web (12).

5. Optical commutator according to claim 1, characterised thereby that in the bending of the membrane (10) the web (12) impinges on an abutment (16) which imports to it a defined position for the projecting into the light beam.

## Revendications

1. Commutateur optique comprenant un élément de déviation (6) monté mobile en translation et qui, en fonction de sa position, ou bien change la direction de la marche d'un rayon lumineux ou laisse sa direction inchangée, caractérisé en ce que l'élément de déviation (6) comporte une membrane (10) fixée par son bord extérieur dans le commutateur et d'où s'étend une nervure (12) pourvue d'une surface réfléchissante (13), et qu'un transducteur électromécanique (15) est prévu pour agir sur la membrane (10), transducteur qui est capable de changer la flexion de cette membrane de manière que la nervure (12) ou bien pénètre par sa surface réfléchissante (13) dans le rayon lumineux et dévie ce rayon, ou soit retirée du rayon lumineux et ne change pas la direction de celui-ci.

2. Commutateur optique selon la revendication 1, caractérisé en ce que l'élément de déviation (6) est fabriqué d'un seul tenant par gravure anisotrope à partir d'un monocristal.

3. Commutateur optique selon la revendication 1, caractérisé en ce que le transducteur électromécanique (15) est une couche piézoélectrique appliquée sur le côté de la membrane (10) opposé à la nervure (12).

4. Commutateur optique selon la revendication 1, caractérisé en ce que le transducteur électromécanique (15) est une couche thermomécanique appliquée sur le côté de la membrane (10) opposé à la nervure (12).

5. Commutateur optique selon la revendication 1, caractérisé en ce que la nervure (12), lors du fléchissement de la membrane (10), vient s'appliquer contre une butée (16) qui lui confère une position définie à son engagement dans le rayon lumineux.
